# EUROPÄISCHE PATENTSCHRIFT

(11) **EP 0 985 858 B1**
(45) Veröffentlichungstag und Bekanntmachung des Hinweises auf die Patenterteilung: **26.05.2004**
(21) Anmeldenummer: 99115566.4
(22) Anmeldetag: 06.08.1999
(51) Int. Cl.: F16H 63/34

(54) **Sperrsystem für eine Handschaltvorrichtung eines Zahnräderwechselgetriebes**
Blocking system for manual shift arrangement for gearbox
Dispositif de blockage pour transmission à engrenages à changement manuel

(30) Priorität: 07.09.1998 DE 29816023 U
(43) Veröffentlichungstag der Anmeldung: 15.03.2000
(73) Patentinhaber: INA-Schaeffler KG, 91074 Herzogenaurach (DE)
(72) Erfinder: Schnapp, Peter, 90431 Nürnberg (DE)

(56) Entgegenhaltungen:
- DE-A- 2 949 354
- DE-A- 3 003 079
- DE-A- 3 601 954
- US-A- 4 633 728
- US-A- 5 144 854
- US-A- 5 289 734

## Beschreibung

### Anwendungsgebiet der Erfindung

Die Erfindung stützt sich auf ein Sperrsystem für eine Schalteinrichtung, entsprechend den Oberbegriffsbildenden Merkmalen von Anspruch 1.

### Hintergrund der Erfindung

Sperrsysteme dieser Bauart verhindern eine Fehlschaltung bei Schaltungsanordnungen, die eine Schaltung eines Vorwärtsgangs und eines Rückwärtsgangs in einer Schaltgasse vorsehen. Diese Sperrsysteme vermeiden damit Beschädigungen von Zahnrädern des Schaltgetriebes. Bekannte Sperrsysteme ermöglichen erst nach einer Rücknahme des Gangschalthebels in die Neutralstellung, ein Schalten des Rückwärtsgangs.

Die DE 30 03 079 zeigt ein gattungsbildendes Sperrsystem zum Verhindern eines fehlerhaften Einlegens des Rückwärtsganges in einem Fahrzeuggetriebe. Der Aufbau dieser bekannten Vorrichtung umfasst einen ortsfest im Getriebegehäuse positionierten Zapfen, an dem stirnseitig ein schwenkbarer, federkraftbeaufschlagter Nocken positioniert ist, der mit einer Schaltwelle des Getriebes zusammenwirkt. Ein vorspringender Teil des Nockens ist so angeordnet, dass dieser nach eingelegtem Vorwärtsgang bei einer anschließenden nächsten Schaltung das Einlegen eines Rückwärtsgangs wirksam unterbindet. Dieses bekannte Sperrsystem erfordert eine Einbaulage, in der der Schalthebel in die Schaltgabel greift, d. h. dort wo ein retativ großer Schwenkbereich der Schaltgabel auftritt.

Die DE 19 46 219 A1 beschreibt ein getriebeinternes Sperrsystem, bei dem ein als Sperrstift ausgeführtes Anschlagelement die Bewegungen einer durch einen Getriebeschalthebel bewegbaren Schaltwelle begrenzen kann, um Fehlschaltungen zu verhindern. Mittels einer Betätigungseinrichtung kann das Anschlagelement aus seiner Sperrstellung gelöst werden. Problematisch ist eine derartige Anordnung, wenn der Sperrstift durch die Schaltwelle belastet wird. In diesem Fall vergrößert sich die erforderliche Kraft zur Entriegelung des Sperrstiftes.

Eine weitere Rückwärtsgangsperre ist aus der DE 36 01 954 C2 bekannt. Dieses Sperrsystem umfaßt einen auf der Schaltwelle angeordneten Schaltfinger, der mit einer an der Getriebegehäusewandung befindlichen Schaltkulisse zusammenwirkt. An einem verlängerten Teil der Schaltkulisse ist eine Schaltsperre vorgesehen, die mit einem zweiten Schaltfinger in Verbindung steht. Als Schaltsperre dient dazu eine an der Schaltkulisse schwenkbar angeordnete Klinke, die mittels einer Feder in einer Neutrallage gehalten und in zwei Richtungen schwenkbar ist. Die Klinke weist an ihrer Oberseite einen Sperrnocken mit einer sogenannten Fangwölbung auf, der bzw. die mit einem zweiten Schaltfinger zusammenwirkt. Der Aufbau dieser bekannten Rückwärtsgangsperre sieht weiterhin vor, daß bei einer Rückschaltung aus dem fünften in den vierten Vorwärtsgang der zweite Schaltfinder auf den Sperrnocken trifft und damit ein gradliniges Durchschalten in den Rückwärtsgang verhindert, der in einer Schaltgasse mit dem fünften Vorwärtsgang schaltbar ist. Die Sperrung bewirkt, daß der Schaltfinger in die benachbarte Schaltgasse umgelenkt wird. Dies bekannte Sperrsystem umfaßt einen großen Bauteileumfang und erfordert aufgrund der parallel zur Schaltwelle versetzten Anordnung der Schaltkulisse, in der die Schaltfinger geführt sind einen großen Einbauraum. Der Aufbau dieser Anordnung führt weiterhin dazu, daß die bekannte Sperrvorrichtung nachteilig von einer Querkraft belastet wird, und daher entsprechend stärker dimensioniert werden muß.

### Aufgabe der Erfindung

Der folgenden Erfindung liegt die Problemstellung zugrunde, ein querkraftfreies, wirksames, den Schaltkomfort verbesserndes Sperrsystem zu entwickeln, das bauraumoptimiert einsetzbar mit einem weiten Bauteil kombinierbar und kostengünstig herstellbar ist.

### Zusammenfassung der Erfindung

Zur Lösung dieser Problemstellung wird erfindungsgemäß ein Sperrsystem mit den kennzeichnenden Merkmalen von Anspruch 1.

Weitere vorteilhafte Ausgestaltungen der Erfindung sind Gegenstand der Ansprüche 2 bis 16.

In einer Ausgestaltung der Erfindung ist eine Sperreinheit vorgesehen, die mit unterschiedlichen drehstarr mit der Schaltwelle verbundenen Übertragungselementen zusammenwirken kann. Vorzugsweise ist die Sperreinheit so im Gehäuse eingesetzt, daß deren Sperrfläche mit einem Anschlagnokken zusammenwirkt, der an einer auf der Schaltwelle befestigten Rastierungshülse fixiert ist. Die Rastierungshülse kann beispielsweise in einen Mantelflächenabschnitt mit einer Profilierung versehen sein, in die ein federbelastetes Arretierelement eingreift, zur Sicherung von Verstellpositionen der Schaltwelle und damit zur Unterstützung einer exakten Schaltung.

Alternativ schließt die Erfindung eine Sperreinheit ein, die mit einem Anschlagnocken eines Übertragungselementes zusammenwirkt, an dem ein Schaltfinger angeordnet ist. Diese Übertragungselemente sind vorzugsweise in einem sogenannten Schaltdom eingesetzt, in dessen Gehäuse die Schaltwelle verschiebbar und verdrehbar gelagert ist und als eine separate Einheit vorkomplettiert in ein Schaltgetriebe eingesetzt werden kann. Der Aufbau der erfindungsgemäßen Sperreinheit ist folglich mit einem Anschlagnocken kombinierbar, der an unterschiedlichen Übertragungselementen angeordnet sein kann. Die Auslegung des Schaltdomes kann danach ausschließlich nach den Gesichtspunkten einer bauraumoptimierten kostengünstigen Bauweise erfolgen, ohne dabei auf ein wirksames erfindungsgemäßen Sperrsystem zu verzichten.

Eine vorteilhafte Ausgestaltung der Sperreinheit sieht vor, daß die vorkomplettierbare Sperreinheit einen die Außenkontur der Sperrklinke übergreifenden Deckel umfaßt, auf dem ein mittenversetzt angeordneter Stift eine Drehachse für die Sperrklinke bildet. Zwischen der axial zum Deckel beabstandeten Anordnung der Sperrklinke stellt sich ein Einbauraum ein, in dem eine an der Achse fixierte Feder angeordnet ist, die eine federnde Mittenposition der Sperrklinke sicherstellt.

Als Feder ist dazu eine Doppelschenkelfeder vorgesehen, deren Windungen die Achse umschließen und deren axial verlaufende Schenkel am freien Ende sich an einem beabstandet zur Achse angeordneten Zapfen des Dekkels abstützen. Zwischen der Achse und dem Zapfen ist ein Ansatz der Sperrklinke zwischen den Schenkelenden der Feder positioniert. Dieser Aufbau der Sperreinheit gewährleistet eine geschützte Anordnung der Schenkelfeder, die beispielsweise bei einem Transport der vorkomplettierten Sperreinheit ein Lösen wirksam unterbindet. Dieser Einbau schützt die Feder gleichzeitig davor, daß diese bei der Montage von dem Anschlagnocken gelöst wird, was zu einem Ausfall des Sperrsystems führen kann.

Eine weitere Ausgestaltung der Erfindung bezieht sich auf einen Stift, der separat von der Sperreinheit im Gehäuse eingesetzt ist, und an dem sich die Sperrklinke in einer Sperrstellung abstützt. Ausgehend von einer Mittenoder Neutralstellung der Sperrklinke wird diese bei einer Schaltung vom Rückwärtsgang in Richtung des in derselben Schaltgasse schaltbaren Vorwärtsgangs verdreht, zur Umlenkung der Schaltwelle in eine Mitten- oder Leerlaufstellung. Dazu stützt sich der Anschlagnocken an der Sperrfläche der Sperrklinke ab und verdreht die Sperrklinke bis diese sich mit einem Anschlag an dem Stift abstützt.

In vorteilhafter Weise ist zur Erzielung einer exakten Schaltung bzw. Wirkungsweise des Sperrsystems ein justierbar im Gehäuse eingesetzter Sperrstift vorgesehen. Als Stift eignet sich insbesondere ein Keilstift, dessen in das Gehäuse ragendes Ende eine einseitig schräge Fläche bildet, an der sich die Sperrklinke in der Sperrstellung abstützt.

In weiterer Ausgestaltung der Erfindung ist vorgesehen, daß der Deckel der Sperreinheit in eine entsprechende Öffnung des Gehäuses positioniert und abgedichtet eingesetzt ist. Damit ist ohne weitere Kontrolle eine funktionsbedingte exakte Einbaulage der Sperrklinke erzielbar, die in eine Bewegungsbahn des Anschlagnockens von einem Übertragungselement ragt. Vorzugsweise dient als Deckel eine kreisringförmige Scheibe. Diese ist zur Erzielung einer definierten Lageorientierung mit einer Ausnehmung oder einem Ansatz versehen, die oder der mit einer entsprechenden Formgebung an der Öffnung des Gehäuses korrespondiert.

Die Anordnung der Sperrklinke in der Einbaulage ist erfindungsgemäß so vorgesehen, daß deren Drehpunkt versetzt zu einer Kraftwirkungslinie angeordnet ist. Dabei ist die Kraftwirkungslinie durch den Kontaktpunkt zwischen dem Anschlagnocken des Übertragungselementes mit der Sperrklinke bestimmt. Dieser Versatz ermöglicht eine gewollte unmittelbare Ab- bzw. Umlenkung des Anschlagnockens und damit der Schaltwelle durch die Sperrklinke, was zu einem verbesserten Schaltgefühl führt. Gleichzeitig vermeidet dieser Versatz die Gefahr einer entgegengesetzten Verdrehung der Sperrklinke, was zu einer Blockade der Schaltung führen kann.

Als ein wirksamer Winkelwert zwischen dem Drehpunkt der Sperrklinke und der Kraftwirkungslinie ist ein Winkel von ≥ 10° vorgesehen. Ein solcher Winkelwert ist ausreichend, um bei einem Gangwechsel eine gewünschte vom Sperrsystem ausgelöste Ablenkung sicherzustellen.

Als eine weitere unterstützende Maßnahme, mit der die Funktion der Sperreinheit verbessert werden kann, ist erfindungsgemäß eine konkav gestaltete Sperrfläche vorgesehen, an die sich gerundete Übergänge anschließen. In vorteilhafter Weise sind die gerundeten Übergänge unterschiedlich ausgebildet. In Richtung des Sperrklinken-Endanschlages schließt sich an den konkaven Sperrflächenverlauf zunächst ein kleiner Radius an, der übergeht in einen deutlich vergrößerten Radius, welcher bis in eine Gerade, eine Längsseite der Sperrklinke übergeht. Gegenseitig schließt sich von einem Wendepunkt der konkaven Sperrfläche ausgehend ein einstufiger Radius an, der sich unverändert bis in eine Seitenfläche erstreckt.

### Kurze Beschreibung der Zeichnungen

In den Zeichnungen sind Ausführungsbeispiele der Erfindung dargestellt, die nachfolgend näher beschrieben sind. Es zeigen:
- Figur 1: alle wesentlichen Bauteile eines Schaltdomes, in dem eine Sperreinheit integriert ist;
- Figur 2: in einer Vorderansicht die erfindungsgemäße Sperreinheit;
- Figur 3: in einer Seitenansicht die Sperreinheit gemäß Figur 2;
- Figur 4: einen Längsschnitt durch die Sperreinheit entlang der Linie IV-IV gemäß Figur 2;
- Figur 5: in einer Explosionszeichnung alle Einzelteile der Sperreinheit;
- Figur 6: in einem vergrößerten Maßstab die Sperrklinke einer Sperreinheit im Zusammenwirken mit einem Anschlagnocken sowie einem Sperrstift und
- Figur 7: in einer Einzelteilzeichnung eine Rastierungshülse, die im Schaltdom gemäß Figur 1 die Funktion eines Übertragungselements übernimmt.

### Ausführliche Beschreibung der Zeichnungen

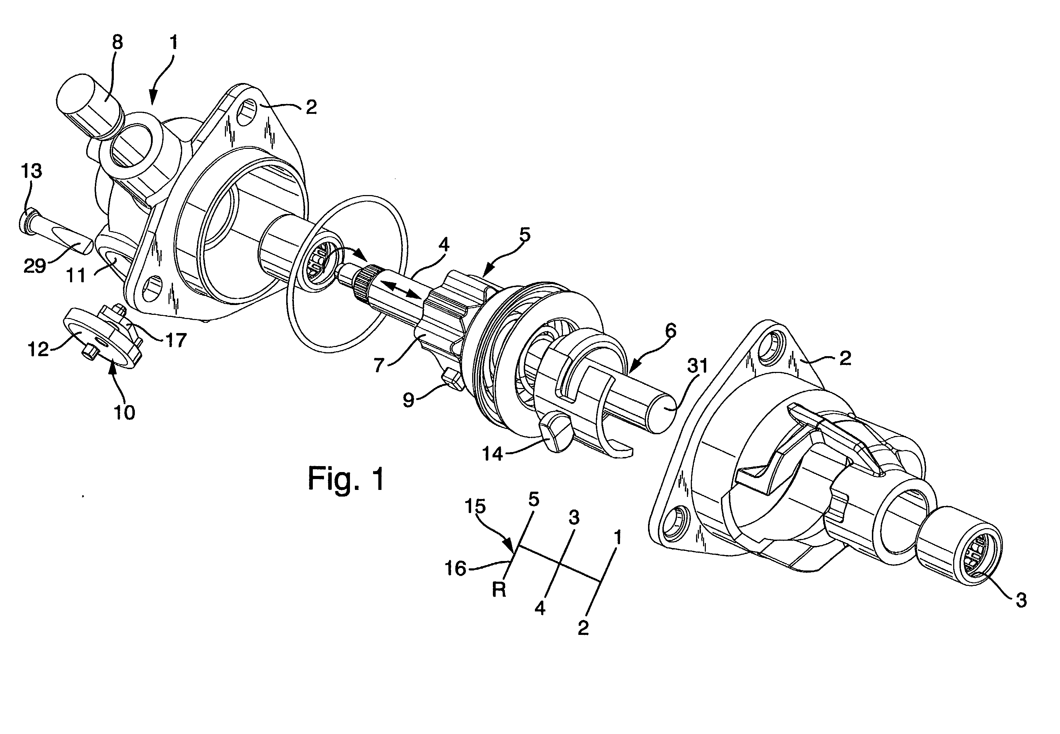

Aus der Figur 1 ist der Aufbau eines Schaltdomes 1 zu ersehen, der als eine vorkomplettierbare Einheit in ein Schaltgetriebe einsetzbar ist. Der Schaltdom 1 umfaßt ein Gehäuse 2, das zwei Gehäusehälften einschließt, in deren Längsbohrung 3 eine Schaltwelle 4 in Richtung der Längsachse 31 verschiebbar und verdrehbar gelagert ist. Auf der Schaltwelle 4 sind zwei axial beabstandete, drehfest angeordnete Übertragungselemente 5, 6 angeordnet. Das Übertragungselement 5 ist dabei als eine Rastierungshülse gestaltet, die in einer Einbaulage mit einer Profilierung 7 formschlüssig mit einem im Gehäuse 2 eingesetzten Arretierelement 8 zusammenwirkt. Winkelversetzt zur Profilierung 7 ist das Übertragungselement 5 weiterhin mit einem radial nach außen gerichteten Anschlagnocken 9 versehen, der in der Einbaulage mit einer Sperreinheit 10 zusammenwirkt. Zur Aufnahme der Sperreinheit 10 ist im Gehäuse 2 eine Öffnung 11 eingebracht, in die ein Deckel 12 der Sperreinheit 10 eingepaßt und abgedichtet ist. Zur Justierung der Sperreinheit 10 dient ein im Gehäuse 2 eingesetzter Stift 13, der mit seinem zur Sperreinheit 10 gerichteten Ende abgeschrägt ist und eine Keilfläche 29 bildet. Das Übertragungselement 6 ist auf seiner Mantelfläche mit einem radial nach außen gerichteten Schaltfinger 14 versehen, der in einer in Figur 1 nicht abgebildeten Schaltgasse geführt ist.

### Wirkungsweise des Sperrsystems:

Die Schaltwelle 4 ist Bestandteil einer Getriebeschaltung, die zur Vorwahl von Schaltgassen verdrehbar und zum Schalten von Gängen axial verschiebbar ist. Der Schaltfinger 14 des Übertragungselements 6 ist dabei in einer in Figur 1 symbolisch seitlich versetzt dargestellten Schaltkulisse 15 geführt. Zur Vermeidung einer Fehlschaltung, d. h. einer unmittelbaren Schaltung von dem fünften Vorwärtsgang in den Rückwärtsgang, die gemeinsam in einer Schaltgasse 16 schaltbar sind, ist der Schaltdom 1 mit einem Sperrsystem versehen. Dieses umfaßt die Sperreinheit 10, deren Sperrklinke 17 mit dem Anschlagnocken 9 des Übertragungselementes 5 zusammenwirkt. Die Sperrklinke 17 ist dabei so gestaltet, daß diese bei einer Rückschaltung vom fünften in den vierten Vorwärtsgang die Schaltwelle 4 in Richtung einer Neutrallage umlenkt und dabei eine Axialkomponente wirksam wird, die eine Verschiebung der Schaltwelle 4 und damit gleichfalls des Schaltfingers 14 bewirkt. Diese gewollte Umlenkung vereinfacht das Schalten in den vierten Vorwärtsgang.

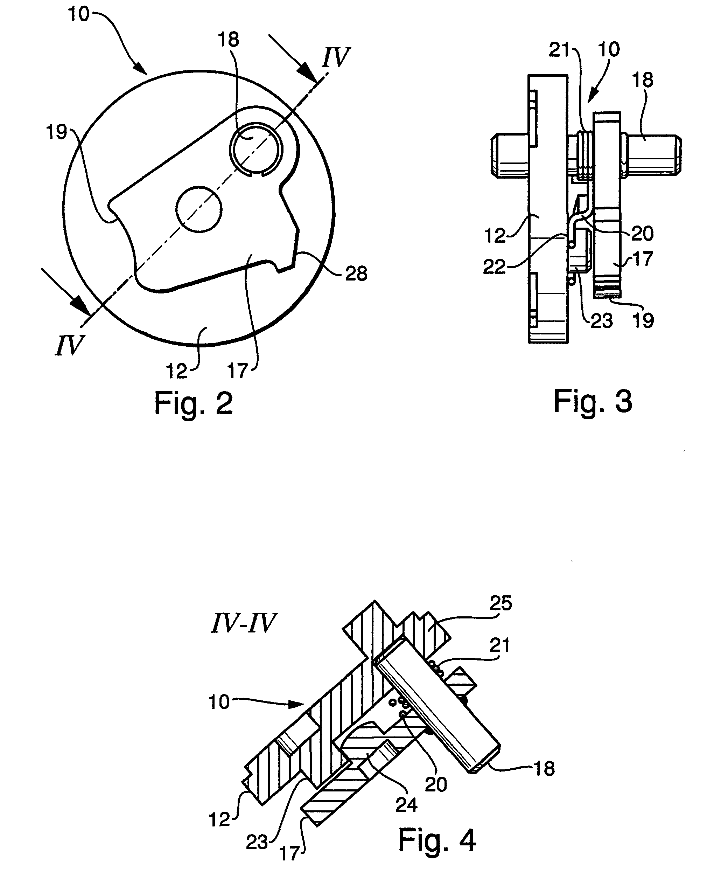

Die Figuren 2 und 3 zeigen die Sperreinheit 10 in einer Vorder- und Seitenansicht und verdeutlichen damit deren kompakte Bauform. Der scheibenartig gestaltete Deckel 12 überdeckt dabei die Außenkontur der Sperrklinke 17. Eine außermittig des Deckels 12 angeordnete Achse 18 dient als Drehpunkt für die Sperrklinke 17, die gegenüberliegend von der Achse 18 eine als Abweisrampe ausgebildete Sperrfläche 19 aufweist. Wie in Figur 3 verdeutlicht, ist die Sperrklinke 17 parallel zum Deckel 12 angeordnet, wobei in dem Zwischenraum eine Doppelschenkelfeder 20 eingebracht ist. Über Windungen 21 ist die Doppelschenkelfeder 20 an der Achse 18 positioniert, wobei deren parallel geführten Schenkel 22 an einem Zapfen 23 des Dekkels 12 abgestützt sind. Zwischen der Achse 18 und dem Zapfen 23 greift ein Ansatz 24 der Sperrklinke 17 in den von den Schenkeln 22 begrenzten Zwischenraum. Diese Federanordnung bewirkt eine federnde Mittenposition der Sperrklinke 17, die diese stets selbsttätig unabhängig von einer äußeren Kraftrichtung nach einer Entlastung einnimmt.

Auch die Figur 4 unterstreicht durch die Schnittansicht der Sperreinheit 10 deren kompakte Bauform. Gleichzeitig zeigt die Figur 4, daß der Deckel 12 spanlos durch Stanzen herstellbar ist. Entsprechend ist der Deckel 12 auf der vom Zapfen 23 gegenüberliegenden Seite mit einer der Zapfenform entsprechenden Ausnehmung versehen. Eine in den Deckel 12 eingeformte Sacklochbohrung 25, zur Aufnahme der Achse 18 bildet auf der gegenüberliegenden Seite des Deckels 12 einen Ansatz. Die Sperrklinke 17 kann ebenfalls durch ein anderes spanloses Verfahren hergestellt werden.

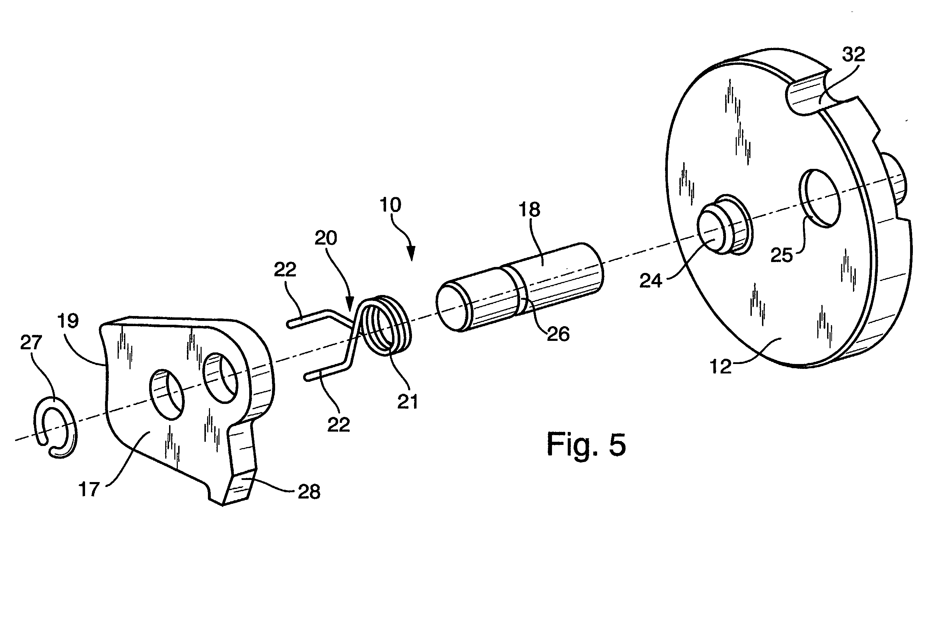

Alle Einzelteile der erfndungsgemäßen Sperreinheit 10 zeigt die Figur 5 in einer Explosionszeichnung. Darin wird beispielsweise die Formgebung der Doppelschenkelfeder 20 verdeutlicht sowie die Gestaltung der Achse 18, die durch ein Einschrumpfen oder Einpressen unlösbar in der Sacklochbohrung 25 des Deckels 12 eingesetzt ist. Die Achse 18 ist mit einer Ringnut 26 versehen, in die ein Sicherungsring 27 einsetzbar ist, der die Sperrklinke 17 lagepositioniert. Der Deckel 12 ist am Außenumfang mit einer Ausnehmung 32 versehen, in die in der Einbaulage ein Ansatz des Gehäuses 2 eingreift. Damit ist ein lageorientierter Einbau der Sperreinheit gesichert.

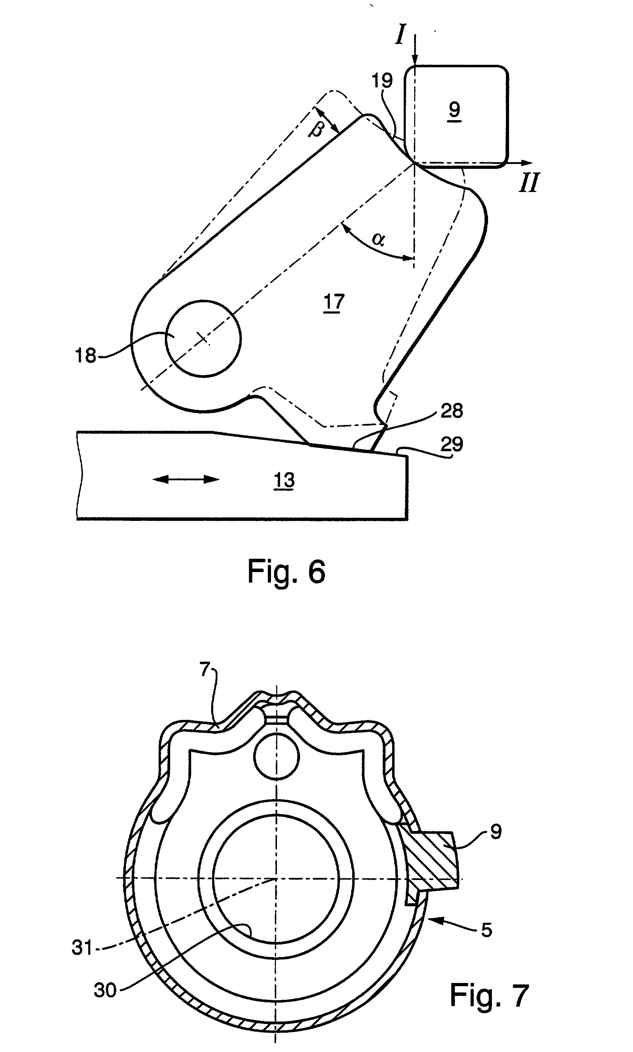

Alle unmittelbaren, das Sperrsystem bildenden Bauteile zeigt die Figur 6. Die Lage der Sperrklinke 17 entspricht dabei der Sperrstellung. In dieser Position stützt sich die Sperrklinke 17 über den Anschlag 28 an der Keilfläche 29 des Stiftes 13 ab. Diese Sperrklinkenlage erfolgt durch den Anschlagnocken 9, der bei einer Rückschaltung vom fünften Vorwärtsgang in den vierten Vorwärtsgang zur Vermeidung einer Fehlschaltung zwanghaft aus der Schaltgasse 16 gemäß Figur 1 in die Neutrallage der Schaltkulisse 15 umgelenkt wird. Eine in Pfeilrichtung "I" gerichtete Bewegung des Anschlagnockens 9, die einer Kraftwirkungslinie entspricht, wird mit Hilfe der Sperrklinke 17 und deren Sperrfläche 19 in eine mit dem Pfeil "II" gekennzeichnete Richtung umgelenkt. Aufgrund der zum Drehpunkt der Sperrklinke 17 versetzten Kraftwirkungslinie, verursacht die Sperrklinke 17 unmittelbar nach Kontakt des Anschlagnockens 9 an der Sperrfläche 19 eine Umlenkung, die den Anschlagnocken 9 in die Neutralstellung der Schaltkulisse 15 verschiebt. Der Versatz der Kraftwirkungslinie "I" zum Drehpunkt der Sperrklinke 17 ist durch den Winkel "α" gekennzeichnet. Sobald sich der Anschlagnocken 9 von der Sperrfläche 19 abhebt, verlagert sich die Sperrklinke 17 bedingt durch die Doppelschenkelfeder 20 in die Ausgangsposition, die strichpunktiert dargestellt ist. Der Winkel "β" gibt dabei den Schwenkwinkel der Sperrklinke 17 an. Zur Justierung der Sperrklinke 17 dient der Stift 13, an dessen Keilfläche 29 sich der Anschlag 28 abstützt. Der Doppelpfeil verdeutlicht, daß der Stift 13 axial verschiebbar ist und damit der Schwenkwinkel "β" eingestellt werden kann.

In Figur 7 ist das Übertragungselement 5 im Querschnitt abgebildet, durch deren Bohrung 30 die Schaltwelle 4 geführt ist. Das beispielsweise spanlos durch eine Tiefziehverfahren gefertigte Übertragungselement 5 ist auch als Rastierungshülse zu bezeichnen. In einem Bereich der Mantelfläche ist das Übertragungselement 5 mit einer in Längsrichtung verlaufenden Profilierung 7 versehen, die im eingebauten Zustand mit dem Arretierelement 8 zusammenwirkt, zur Erzielung exakter Lagepositionen der Schaltwelle 4. Winkelversetzt zur Profilierung 7 ist das Übertragungselement weiter mit einem radial nach außen gerichteten Anschlagnocken 9 versehen. Dieser vorzugsweise als ein separates Bauteil am Übertragungselement 5 befestigte Anschlagnocken 9 bildet gemeinsam mit der Sperreinheit 10 ein wirksames Sperrsystem zur Vermeidung einer Fehlschaltung.

### Bezugszahlenliste

- 1: Schaltdom
- 2: Gehäuse
- 3: Längsbohrung
- 4: Schaltwelle
- 5: Übertragungselement
- 6: Übertragungselement
- 7: Profilierung
- 8: Arretierelement
- 9: Anschlagnocken
- 10: Sperreinheit
- 11: Öffnung
- 12: Deckel
- 13: Stift
- 14: Schaltfinger
- 15: Schaltkulisse
- 16: Schaltgasse
- 17: Sperrklinke
- 18: Achse
- 19: Sperrfläche
- 20: Doppelschenkelfeder
- 21: Windung
- 22: Schenkel
- 23: Zapfen
- 24: Ansatz
- 25: Sacklochbohrung
- 26: Ringnut
- 27: Sicherungsring
- 28: Anschlag
- 29: Keilfläche
- 30: Bohrung
- 31: Längsachse
- 32: Ausnehmung

## Patentansprüche

1. Sperrsystem für eine Schalteinrichtung, insbesondere eine mechanisch betätigbare Handschaltvorrichtung eines Zahnräderwechselgetriebes von Kraftfahrzeugen, das mit zumindest einem drehstarr auf einer Schaltwelle (4) angeordneten Übertragungselement (5, 6) zusammenwirkt, wobei die in einem Gehäuse geführte Schaltwelle mittels eines Schalthebels zur Vorwahl einer Schaltgasse (16) axial verschiebbar und zur Gangschaltung verdrehbar ist und ein mit dem Übertragungselement (5, 6) verbundener Schaltfinger (14) mit verschiebbaren Schaltgabeln oder Schaltstangen in Eingriff steht und das Sperrsystem eine schwenkbare Sperreinheit (10) umfaßt, das eine geradlinige Bewegung der Schaltwelle (4) zur Schaltung eines Vorwärtsgangs ermöglicht und eine Umkehrung der Bewegung, ein Durchschalten in einen in derselben Schaltgasse (16) schaltbaren Rückwärtsgang unterbindet **dadurch gekennzeichnet, dass** die Sperreinheit (10) in einem Gehäuse (2), bestehend aus zwei Gehäusehälften, rechtwinkelig zu einer in dem Gehäuse (2) verschiebbar und verdrehbar gelagerten Schaltwelle (4) eingesetzt ist und dass zumindest das Gehäuse (2), die Schaltwelle (4) und die Sperreinheit (10) als Einheit ausgebildet in dem Zahnräderwechselgetriebe eingesetzt ist.

2. Sperrsystem nach Anspruch 1, **dadurch gekennzeichnet, dass** die Sperreinheit (10) eine Sperrklinke (17) aufweist, die eine als Abweisrampe ausgebildete Sperrfläche (19) umfasst, die mit einem Anschlagnocken (9) des Übertragungselementes (5) zusammenwirkt.

3. Sperrsystem nach Anspruch 1, **dadurch gekennzeichnet, daß** die Sperreinheit (10) mit einem als Rastierungshülse ausgebildeten Übertragungselement (5) zusammenwirkt.

4. Sperrsystem nach Anspruch 1, **dadurch gekennzeichnet, daß** die Sperreinheit (10) mit einem Übertragungselement (6) zusammenwirkt.

5. Sperrsystem nach Anspruch 1, **dadurch gekennzeichnet, daß** die vorkomplettierbare Sperreinheit (10) einen die Außenkontur der Sperrklinke (17) übergreifenden Deckel (12) umfaßt, auf dem eine mittenversetzt angeordnete Achse (18) eine Drehachse für die Sperrklinke (17) bildet.

6. Sperrsystem nach Anspruch 5, **gekennzeichnet durch** eine axial beabstandete Anordnung der Sperrklinke (17) zum Deckel (12), wobei zwischen der Sperrklinke (17) und dem Deckel (12) eine an der Achse (18) fixierte Doppelschenkelfeder (20) eine Mittenposition der Sperrklinke (17) sichert.

7. Sperrsystem nach Anspruch 5, **dadurch gekennzeichnet, daß** die Doppelschenkelfeder (20) mit Windungen (21) die Achse (18) umschließt und deren parallel ausgerichtete Schenkel (22) am freien Ende an einem Zapfen (23) des Deckels (12) abgestützt sind und gleichzeitig zwischen der Achse 18 und dem Zapfen (23) einen einstückig mit der Sperrklinke (17) verbundenen Ansatz (24) positionieren.

8. Sperrsystem nach Anspruch 2, **dadurch gekennzeichnet, daß** von einer Mitten- bzw. Neutralstellung der Sperrklinke (17) ausgehend, diese in einer Sperrstellung mit einem Anschlag (28) an einem Sperrstift (13) abgestützt ist.

9. Sperrsystem nach Anspruch 8, **dadurch gekennzeichnet, daß** der Stift (13) justierbar im Gehäuse (2) eingesetzt ist.

10. Sperrsystem nach Anspruch 9, **dadurch gekennzeichnet, daß** der Stift (13) an dem zur Sperreinheit (10) gerichteten Ende eine Keilfläche (29) aufweist, an die sich die Sperrklinke (17) über den Anschlag (28) in der Sperrstellung abstützt.

11. Sperrsystem nach Anspruch 1, **dadurch gekennzeichnet, daß** der Dekkel (12) der Sperreinheit (10) in eine entsprechende Öffnung (11) des Gehäuses (2) positioniert und abgedichtet eingesetzt ist, wobei in der Einbaulage die Sperrklinke (17) in eine Bewegungsbahn des mit dem Übertragungselement (5) verbundenen Anschlagnockens (9) ragt.

12. Sperrsystem nach Anspruch 11, **dadurch gekennzeichnet, daß** der als kreisringförmige Scheibe gestaltete Deckel (12) zur Lageorientierung mit einer Ausnehmung (31) versehen ist, die mit einem entsprechenden Ansatz in der Öffnung (11) des Gehäuses (2) korrespondiert.

13. Sperrsystem nach Anspruch 1, **gekennzeichnet durch** eine von einem Kontaktpunkt des Anschlagnockens (9) mit der Sperrklinke (17) bestimmten Kraftwirkungslinie, die versetzt zu der Achse (18) verläuft, die den Drehpunkt der Sperrklinke (17) bestimmt.

14. Sperrsystem nach Anspruch 13, **dadurch gekennzeichnet, daß** in der Neutralstellung der Sperrklinke (17) deren durch die Achse (18) bestimmte Drehpunkt unter einem Winkel α ≥ 10° zur Kraftwirkungslinie "I" des Anschlagnockens (9) positioniert ist.

15. Sperrsystem nach Anspruch 2, **gekennzeichnet durch** eine konkav gestaltete Sperrfläche (19) der Sperrklinke (17).

16. Sperrsystem nach Anspruch 15, **dadurch gekennzeichnet, daß** sich an die konkav gestaltete Sperrfläche (19) der Sperrklinke (17) beidseitig gerundete Übergänge anschließen.

## Claims

1. Locking system for a shift device, in particular a mechanically actuable manual shift arrangement of a change speed gearbox for motor vehicles, which locking system interacts with at least one transmission element (5, 6) arranged on a shift shaft (4) in a rotationally rigid manner, it being possible to axially displace the switch shaft, which is guided in a housing, by means of a gear lever in order to preselect a shift gate (16) and it being possible to rotate the said switch shaft in order to select a gear, and a shift finger (14) which is connected to the transmission element (5, 6) being in engagement with displaceable selector forks or selector rods and the locking system comprising a pivotable locking unit (10) which makes rectilinear movement of the switch shaft (4) possible in order to select a forward gear and prohibits a reversal of the movement, a switching operation into a reverse gear which can be selected in the same shift gate (16), **characterized in that** the locking unit (10) is installed in a housing (2), comprising two housing halves, and at right angles to a shift shaft (4) which is mounted in the housing (2) in a displaceable and rotatable manner, and **in that** at least the housing (2), the shift shaft (4) and the locking unit (10), configured as one unit, are installed in the change speed gearbox.

2. Locking system according to Claim 1, **characterized in that** the locking unit (10) has a detent (17) which comprises a locking face (19) which is configured as a diverting ramp and interacts with a stop cam (9) of the transmission element (5).

3. Locking system according to Claim 1, **characterized in that** the locking unit (10) interacts with a transmission element (5) which is configured as a detent sleeve.

4. Locking system according to Claim 1, **characterized in that** the locking unit (10) interacts with a transmission element (6).

5. Locking system according to Claim 1, **characterized in that** the locking unit (10), which can be preassembled, has a cover (12) which engages over the outer contour of the detent (17), on which cover (12) an off-centre axle (18) forms a rotational axis for the detent (17).

6. Locking system according to Claim 5, **characterized by** an axially spaced-apart arrangement of the detent (17) with respect to the cover (12), a double leg spring (20) which is fixed to the axle (18) ensuring a central position of the detent (17) between the detent (17) and the cover (12).

7. Locking system according to Claim 5, **characterized in that** the double leg spring (20) encloses the axle (18) with windings (21) and its legs (22) which are oriented in parallel are supported at the free end on a journal (23) of the lid (12) and simultaneously position a projection (24), which is integrally connected to the detent (17), between the axle (18) and the journal (23).

8. Locking system according to Claim 2, **characterized in that**, starting from a central or neutral position of the detent (17), the latter is supported in a locking position with a stop (28) on a locking pin (13).

9. Locking system according to Claim 8, **characterized in that** the pin (13) is adjustably inserted in the housing (2).

10. Locking system according to Claim 9, **characterized in that**, at the end oriented towards the locking unit (10), the pin (13) has a wedge surface (29) on which the detent (17) is supported in the locking position via the stop (28).

11. Locking system according to Claim 1, **characterized in that** the cover (12) of the locking unit (10) is positioned and inserted in a sealed manner into a corresponding opening (11) of the housing (2), the detent (17) projecting, in the installation position, into a movement path of the stop cam (9) which is connected to the transmission element (5).

12. Locking system according to Claim 11, **characterized in that**, for the purpose of positional orientation, the cover (12) which is designed as an annular disc is provided with a recess (31) which corresponds to an appropriate projection in the opening (11) of the housing (2).

13. Locking system according to Claim 1, **characterized by** a force action line which is determined by a contact point of the stop cam (9) with the detent (17), extends offset with respect to the axle (18), and determines the pivot point of the detent (17).

14. Locking system according to Claim 13, **characterized in that**, in the neutral position of the detent (17), the pivot point of the latter which is determined by the axle (18) is positioned at an angle a 10° with respect to the force action line "I" of the stop cam (9).

15. Locking system according to Claim 2, **characterized by** a concave locking face (19) of the detent (17).

16. Locking system according to Claim 15, **characterized in that** transitional regions which are rounded on both sides adjoin the concave locking face (19) of the detent (17).

## Revendications

1. Dispositif de blocage pour un dispositif de changement de vitesses, notamment un dispositif de changement de vitesses manuel actionnable mécaniquement d'une boîte de vitesses à engrenages de véhicules automobiles, qui coopère avec au moins un élément de transmission (5, 6) disposé fixe en rotation sur un arbre de changement de vitesses (4), l'arbre de changement de vitesses guidé dans un carter pouvant coulisser axialement au moyen d'un levier de changement de vitesses pour la présélection d'une voie de sélection de vitesses (16) et pouvant tourner en vue de la sélection de vitesses, et un doigt de sélection de vitesses (14) connecté à l'élément de transmission (5, 6) étant en prise avec des fourchettes de sélection de vitesses ou des tiges de sélection de vitesses coulissantes et le système de blocage comprenant une unité de blocage pivotante (10) qui permet un déplacement rectiligne de l'arbre de changement de vitesses (4) pour la sélection d'une vitesse de marche avant et empêche une inversion du déplacement, un couplage dans une vitesse de marche arrière pouvant être sélectionnée dans la même voie de sélection de vitesses (16), **caractérisé en ce que** l'unité de blocage (10) est insérée dans un carter (2) se composant de deux moitiés de carter, à angle droit par rapport à un arbre de changement de vitesses (4) monté de manière à pouvoir tourner et coulisser dans le carter (2) et **en ce qu'**au moins le carter (2), l'arbre de changement de vitesses (4) et l'unité de blocage (10), réalisés sous forme d'unité, sont insérés dans la boîte de vitesses à engrenages.

2. Dispositif de blocage selon la revendication 1, **caractérisé en ce que** l'unité de blocage (10) présente un cliquet d'arrêt (17) qui comprend une face de blocage (19) réalisée sous forme de rampe de déflection, qui coopère avec une came de butée (9) de l'élément de transmission (5).

3. Dispositif de blocage selon la revendication 1, **caractérisé en ce que** l'unité de blocage (10) coopère avec un élément de transmission (5) réalisé sous forme de manchon d'arrêt.

4. Dispositif de blocage selon la revendication 1, **caractérisé en ce que** l'unité de blocage (10) coopère avec un élément de transmission (6).

5. Dispositif de blocage selon la revendication 1, **caractérisé en ce que** l'unité de blocage (10) pouvant être pré-assemblée comprend un couvercle (12) venant en prise par le haut avec le contour extérieur du cliquet d'arrêt (17), sur lequel un axe (18) disposé de manière décalé par rapport au centre forme un axe de rotation pour le cliquet d'arrêt (17).

6. Dispositif de blocage selon la revendication 5, **caractérisé par** un agencement espacé axialement du cliquet d'arrêt (17) par rapport au couvercle (12), entre le cliquet d'arrêt (17) et le couvercle (12) un ressort à deux branches (20) fixé sur l'axe (18) assurant une position centrale du cliquet d'arrêt (17).

7. Dispositif de blocage selon la revendication 5, **caractérisé en ce que** le ressort à deux branches (20) entoure avec des spires (21) l'axe (18) et ses branches (22) orientées parallèlement sont supportées à l'extrémité libre sur un tourillon (23) du couvercle (12) et positionnent simultanément entre l'axe (18) et le tourillon (23) une saillie (24) connectée d'une seule pièce au cliquet d'arrêt (17).

8. Dispositif de blocage selon la revendication 2, **caractérisé en ce que** partant d'une position centrale ou neutre du cliquet d'arrêt (17), celui-ci est supporté dans une position de blocage avec une butée (28) contre une tige de blocage (13).

9. Dispositif de blocage selon la revendication 8, **caractérisé en ce que** la tige (13) est insérée de manière ajustable dans le carter (2).

10. Dispositif de blocage selon la revendication 9, **caractérisé en ce que** la tige (13) présente sur l'extrémité orientée vers l'unité de blocage (10) une surface de clavette (29) contre laquelle le cliquet d'arrêt (17) s'appuie par le biais de la butée (28) dans la position de blocage.

11. Dispositif de blocage selon la revendication 1, **caractérisé en ce que** le couvercle (12) de l'unité de blocage (10) est positionné dans une ouverture correspondante (11) du carter (2) et est inséré de manière étanche, le cliquet d'arrêt (17) faisant saillie dans la position de montage dans une piste de déplacement de la came de butée (9) connectée à l'élément de transmission (5).

12. Dispositif de blocage selon la revendication 11, **caractérisé en ce que** le couvercle (12) réalisé sous forme de disque de forme annulaire circulaire est pourvu pour l'orientation en position d'un évidement (31) qui correspond à une saillie correspondante dans l'ouverture (11) du carter (2).

13. Dispositif de blocage selon la revendication 1, **caractérisé par** une ligne d'action de force déterminée par un point de contact de la came de butée (9) avec le cliquet d'arrêt (17), qui s'étend de manière décalée par rapport à l'axe (18) qui détermine le centre de rotation du cliquet d'arrêt (17).

14. Dispositif de blocage selon la revendication 13, **caractérisé en ce que** dans la position neutre du cliquet d'arrêt (17), son centre de rotation déterminé par l'axe (18) est positionné suivant un angle α ≥ 10° par rapport à la ligne d'action de force "1" de la came de butée (9).

15. Dispositif de blocage selon la revendication 2, **caractérisé par** une face de blocage de forme concave (19) du cliquet d'arrêt (17).

16. Dispositif de blocage selon la revendication 15, **caractérisé en ce que** des transitions arrondies des deux côtés se raccordent à la face de blocage (19) de forme concave du cliquet d'arrêt (17).
